# EUROPÄISCHE PATENTSCHRIFT

(11) **EP 0 642 865 B1**
(45) Veröffentlichungstag und Bekanntmachung des Hinweises auf die Patenterteilung: **22.03.2000**
(21) Anmeldenummer: 94113832.3
(22) Anmeldetag: 03.09.1994
(51) Int. Cl.: B23D 31/04

(54) **Vorrichtung zum Besäumen der Längskanten von laufendem Walzgut**
Device for edge trimming of longitudinally-advancing rolling mill products
Dispositif pour le rognage des rives longitudinales de produits laminés en mouvement

(30) Priorität: 10.09.1993 DE 4330657
(43) Veröffentlichungstag der Anmeldung: 15.03.1995
(73) Patentinhaber: SMS SCHLOEMANN-SIEMAG AKTIENGESELLSCHAFT, 40237 Düsseldorf (DE)
(72) Erfinder: Fritz, Manfred, D-40699 Erkrath (DE); de Kock, Peter, D-46242 Bottrop (DE)
(74) Vertreter: Valentin, Ekkehard, Dipl.-Ing.

(56) Entgegenhaltungen:
- AT-B- 290 952
- DE-A- 3 741 219
- US-A- 2 368 152

## Beschreibung

Die Erfindung betrifft eine Vorrichtung zum Besäumen der Längskanten von laufendem Walzband, mit einer rotierenden Besäumschere und einer rotierenden Schrott- bzw. Saumstreifen-Teilschere, zwischen denen eine Saumstreifenführung angeordnet ist, insbesondere eine solche, bei der in Laufrichtung des Walzbandes eine Besäumschere und eine Schrott- bzw. Saumstreifen-Teilschere zu einer Kompakt-Baueinheit zusammengefaßt sind.

Vor allem in Anlagen zur Bandbehandlung (z.B. Beizen, Feuerverzinkungen, Scherenlinien etc.) werden derartige Kreismesserbesäumscheren eingesetzt, um rechts und links die runde Bandkante abzutrennen und dabei das Band möglichst gleichzeitig auf eine genaue Bandbreite zu schneiden. Die Zuordnung einer Schrott- bzw. Saumstreifen-Teilschere, die sich bei der Sonderbauweise in Form einer Kompakt-Baueinheit in Durchlaufrichtung des Walzbandes in relativ geringer Entfernung auf einer tiefer gelegenen Arbeitsebene der Kreismesserbesäumschere anschließt, wobei eine Saumstreifenführung den Saumstreifen von der Kreismesserbesäumschere zu der Schrott- bzw. Saumstreifen-Teilschere leitet, ermöglicht es, die vom laufenden Walzband abgetrennten Saumstreifen für ihren Abtransport aus dem Bereich der Scherenanlage in chargierfähige Schrottstücke zu unterteilen.

Die Kreismesserbesäumeinrichtungen beeinflussen in Kontianlagen durch den Grad ihrer Betriebssicherheit wesentlich den Nutzungsgrad der gesamten Anlage. Damit sich Wartungs- bzw. Montagearbeiten, z.B. ein notwendiger Wechsel der Messerköpfe, sowohl an den Besäumscheren als auch an den Schrott- bzw. Saumstreifen-Teilscheren durchführen lassen, ohne unnötig hohe Stillstandzeiten der Anlage zu verursachen, d.h. ohne die Laufbewegung des Walzbandes über Gebühr stillsetzen zu müssen, ist es durch die DE 37 41 219 A1 bekanntgeworden, zwei baugleiche Kompakt-Baueinheiten, die somit jeweils aus einer rotierenden Kreismesserbesäumschere und einer rotierenden Schrott- bzw. Saumstreifen-Teilschere bestehen, um eine vorbestimmte, normal zur Durchlaufebene des Walzbandes gerichtete Achse zueinander winkelversetzt auf einem gemeinsamen Träger zu montieren. Der Träger ist dabei um die Achse relativ zum Durchlaufbereich des Walzbandes in zwei verschiedene Drehstellungen beweglich, deren Winkelabstand voneinander dem Winkelabstand zwischen den beiden Kompakt-Baueinheiten entspricht. Bei Wartungs- bzw. Montagearbeiten ist es daher lediglich notwendig, die im Schneideinsatz befindliche Kompakt-Baueinheit aus ihrer Arbeitsstellung in die Ruhestellung zu verlagern, womit dann aber gleichzeitig die zweite Kompakt-Baueinheit relativ zum Walzband in die Arbeits- bzw. Schneidposition gelangt, so daß sich nur sehr geringe Stillstandszeiten ergeben.

Wie sich allerdings herausgestellt hat, haben Betriebsstörungen, und zwar sowohl bei konventionellen als auch in Kompakt-Bauweise ausgeführten Besäumscheren, häufig ihre Ursache in den zwischen der Kreismesserbesäumschere und der Schrott- bzw. Saumstreifen-Teilschere angeordneten Saumstreifenführungen, die durch den Saumstreifen verstopft werden kann. Das Austauschen der Schneideinheiten durch Drehen in der Horizontalen stellt in diesen Fällen keine wirksame Gegenmaßnahme dar. Die in der Saumführung steckenden Saumstreifen sind nämlich noch mit dem Band verbunden und müssen von Hand oder der zu anderen Zwecken benötigten, der Schneideinheit in großem Abstand vorgeschalteten Seitenstanze abgetrennt werden. Sowohl das manuelle Abtrennen als auch der Einsatz der Seitenstanze führen zu unerwünschten Stillständen der Anlage und damit zum zeitweiligen Produktionsausfall; beim Einsatz der Seitenstanze kommt noch hinzu, daß sich Beschädigungen am Walzband nicht vermeiden lassen, mit der Folge eines gegebenenfalls zwei Meter oder längeren Abfallstückes des Walzbandes.

Der Erfindung liegt daher die Aufgabe zugrunde, für eine Vorrichtung der eingangs genannten Art eine verbesserte Betriebsweise, insbesondere ein bei Störungen notwendiges Freischneiden der Saumstreifen automatisch, ohne Beschädigungen am Walzband, zu ermöglichen.

Diese Aufgabe wird erfindungsgemäß dadurch gelöst, daß der Kreismesserbesäumschere eine der Saumstreifenbreite angepaßte Querteileinrichtung vorgeordnet, vorzugsweise unmittelbar am Besäumscherengehäuse befestigt ist. Die Querteileinrichtung, die sich vorteilhaft als Schere ausbilden läßt, ist so ausgerichtet und ausgelegt, daß sie lediglich den Saumstreifen durchtrennt, ohne dabei in das bereits besäumte Band hineinzuschneiden und dieses zu beschädigen. Es läßt sich somit ein automatisierter, beschleunigter, die Stillstandzeiten der Anlage minimierender Betrieb erreichen. Zum Abtrennen des die Saumführung verstopfenden Saumstreifens braucht das Walzband nämlich nur so lange gegen die Produktionsrichtung zurückgefahren zu werden, bis an beiden Seiten des Walzbandes die Saumstreifen im Arbeitsbereich der Querteileinrichtung bzw. -schere liegen.

Es empfiehlt sich, daß das Untermesser der Schere starr und das Obermesser auf- und abbeweglich ist. Durch Betätigen des Obermessers, das wie das Untermesser nur geringfügig breiter als der Saumstreifen ist, durch beispielsweise einen Hydraulik- oder Pneumatikzylinder, läßt sich zum Schnitt das Obermesser gegen das Untermesser bewegen.

Eine Ausgestaltung der Erfindung sieht vor, daß der Besäumschere eine Bandklemmeinheit vorgeschaltet ist. Diese ermöglicht es, beispielsweise indem eine hydraulisch oder pneumatisch anstellbare Oberplatte oder ein Oberbalken gegen eine Unterplatte bzw. einen Unterbalken bewegt wird, daß sich das Walzband zwischen den sich über die Breite des Walzbandes erstreckenden Platten bzw. Balken einklemmen läßt, was ein Verrutschen des Walzbandes verhindert.

Wenn - wie durch die eingangs genannte deutsche Offenlegungsschrift bekannt - vorzugsweise zwei baugleiche Kompakt-Baueinheiten eine relativ zum Durchlaufbereich des Walzbandes verschwenkbare Wechselbesäumschere in Kompakt-Bauweise bilden, läßt sich in der Kombination mit der Bandklemmeinheit eine während des Besäumscherenwechsels sichere Positionierung des Walzbandes erreichen. Sobald die Saumstreifen durch Betätigen der Querteileinrichtung abgetrennt worden sind, ist das Band von den in den Saumführungen steckenden Saumstreifen frei, und durch Herausschwenken der an beiden Seiten des Walzbandes in Betrieb befindlichen Kreismesserbesäumscheren mit den Saumführungen werden die bedingt durch den Störungsfall unbrauchbaren Besäumeinheiten gegen die einsatzbereiten Besäumeinheiten ausgetauscht. Die Kreismesser der neuen Einheiten werden dabei in die gleiche Position wie die der zuvor in Betrieb befindlichen Schereneinheiten gebracht. Die Produktion kann dann sogleich wieder aufgenommen werden. Während die neuen Besäumeinheiten bereits wieder arbeiten, können die ausgeschwenkten Besäumeinheiten in einen betriebsbereiten Zustand versetzt werden.

Weitere Merkmale und Vorteile der Erfindung ergeben sich aus den Ansprüchen und der nachfolgenden Beschreibung, in der ein in den Zeichnungen dargestelltes Ausführungsbeispiel des im Zusammenhang mit einer als Kompakt-Baueinheit ausgebildeten Gegenstandes der Erfindung näher erläutert ist. Es zeigen:
- Fig. 1: in sehr schematischer Darstellung eine eine Kompakt-Scherenbaueinheit aufweisende Bandbehandlungsanlage, als Teilansicht von der Seite her gesehen;
- Fig. 2: als Einzelheit eine mit einer Saumstreifen-Querteileinrichtung versehene Kreismesserbesäumschere, in der Seitenansicht dargestellt; und
- Fig. 3: die Vorderansicht der in Fig. 2 gezeigten Kreismesserbesäumschere.

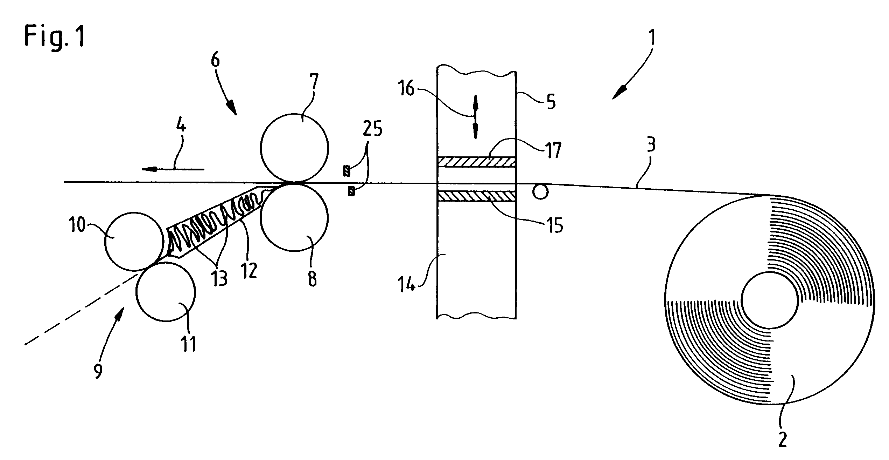

Von einer Bandbehandlungsanlage 1 sind gemäß Fig. 1 lediglich eine Steuerrolle 2, über die das zu behandelnde Walzband 3 in Produktionsrichtung 4 kontinuierlich abläuft, eine Bandklemmeinheit 5 und eine Kompakt-Besäumscheren-Baueinheit 6 dargestellt. Die Besäumschereneinheit 6 besteht aus einem oberen und einem unteren rotierenden Kreismesser 7 bzw. 8 , die eine Kreismesserbesäumschere bilden, und aus einer Schrott- bzw. Saumstreifen-Teilschere 9, die in einer gegenüber den Besäumkreismessern 7,8 tiefer gelegenen Arbeitsebene angeordnet ist und ebenfalls ein oberes und ein unteres rotierendes Kreismesser 10 bzw. 11 aufweist. Auf einem ortsfesten, rahmenartigen Unterbau sind zu beiden Seiten des Durchlaufbereichs für das Walzband 3 jeweils zwei auf einem in der Horizontalen verschwenkbaren Träger angeordnete Besäumschereneinheiten 6 vorhanden, so daß sich einerseits das Walzband 3 an beiden Längskanten gleichzeitig besäumen läßt und andererseits durch Verschwenken des Trägers die erste gegen die zweite Kompakt-Baueinheit austauschen, d.h. in Betriebsposition bringen läßt. Von der höher gelegenen Arbeitsebene der Besäumkreismesser 7,8 erstreckt sich zu der tiefer gelegenen Arbeitsebene der zugehörigen Messerköpfe 10,11 der Saumstreifenteilschere 9 mit einer entsprechenden Neigung eine Saumstreifenführung 12, die die abgetrennten Saumstreifen 13 von den Besäumkreismessern 7,8 zu den Messerköpfen 10,11 der Saumstreifen-Teilschere 9 leitet.

Die der Kompakt-Besäumscheren-Baueinheit 6 vorgeschaltete Bandklemmeinheit 5 weist in einem nicht näher dargestellten Tragrahmen 14 eine sich unterhalb des Bandlaufs über die Breite des Walzbandes 3 erstreckende, starre Klemmplatte 15 auf, der eine von beispielsweise einem Hydraulik- oder Pneumatikzylinder in Richtung des Doppelpfeils 16 auf- und abbewegliche obere Klemmplatte 17 zugeordnet ist. Durch Anstellen der oberen Klemmplatte 17 gegen die untere Klemmplatte 15 wird das Walzband 3 zwischen den Klemmplatten 15,17 eingeklemmt und - insbesondere während des Austauschs bzw. Wechsels von Kompakt-Besäumscheren-Baueinheiten - gegen ein Verrutschen gesichert.

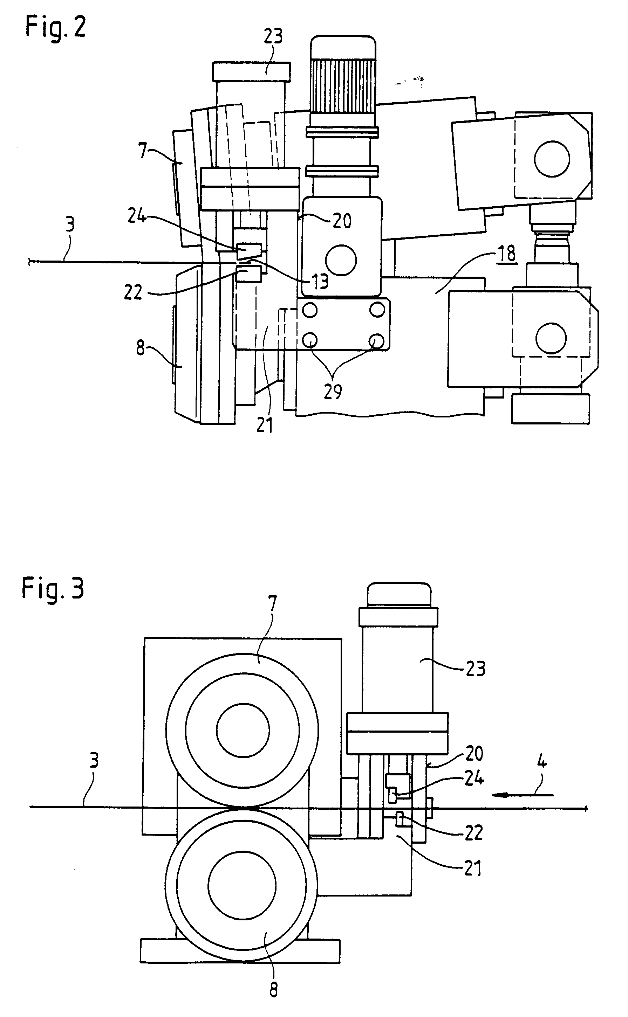

Wie sich den Fig. 2 und 3 entnehmen läßt, ist unmittelbar am Scherengehäuse 18 der Besäum- bzw. Kreismesser 7,8 mittels Schrauben 29 eine als Schere 20 ausgebildete Querteileinrichtung zum Abtrennen des Saumstreifens 13 angeflanscht. Die Querteileinrichtung bzw. Schere 20 besitzt ein im Scherenrahmen 21 starr, d.h. unbeweglich angeordnetes Untermesser 22 und ein mittels eines Zylinders 23 auf- und abbewegliches und damit gegen das Untermesser 22 zum Schnitt bringbares Obermesser 24. Dies dann, wenn sich - was häufig nicht zu vermeiden ist - der Saumstreifen 13 in der Saumstreifenführung 12 staut und damit zu Betriebsstörungen führende Verstopfungen bewirkt. In solchen Fällen kann der betreffende Saumstreifen 13 durch Betätigen des Zylinders 23, d.h. ohne manuellen Eingriff zwischen dem Ober- und dem Untermesser 22,24 der Schere 20 abgetrennt werden, so daß sich die Störzeiten minimieren lassen.

Dabei wird - anders als beim zweckentfremdeten Einsatz der der Besäumscheren-Baueinheit 6 vorgeschalteten Stanze 25 (vgl. Fig. 1) - das Walzband 3 nicht beschädigt, denn Unter- und Obermesser 22,24 der Schere 20 lassen sich so anordnen, daß sie ausschließlich den Saumstreifen 13 abtrennen und nicht in das Walzband 3 hineinschneiden. Sobald das Walzband 3 von den in der bzw. den Saumführungen 12 steckenden Saumstreifen 13 befreit ist, läßt sich die Besäumscheren-Baueinheit 6 aus dem Bandlauf herausschwenken und dabei gleichzeitig eine baugleiche Besäumscheren-Baueinheit, die in den Figuren nicht gezeigt ist, in die Betriebsposition bringen.

## Patentansprüche

1. Vorrichtung zum Besäumen der Längskanten von laufendem Walzband, mit einer rotierenden Besäumschere und einer rotierenden Schrott- bzw. Saumstreifenteilschere, zwischen denen eine Saumstreifenführung angeordnet ist, insbesondere eine solche, bei der in Laufrichtung des Walzbandes eine Besäumschere und eine Schrott-bzw. Saumstreifen-Teilschere zu einer Kompakt-Baueinheit zusammengefaßt sind,
**dadurch gekennzeichnet**,
daß der Besäumschere (7,8) eine der Saumstreifenbreite angepaßte Querteileinrichtung (20) vorgeordnet ist.

2. Vorrichtung nach Anspruch 1,
**dadurch gekennzeichnet**,
daß die Querteileinrichtug (20) am Besäumscherengehäuse (18) befestigt ist.

3. Vorrichtung nach Anspruch 1 oder 2,
**dadurch gekennzeichnet**,
daß die Querteileinrichtung als Schere (20) ausgebildet ist.

4. Vorrichtung nach Anspruch 3,
**dadurch gekennzeichnet**,
daß das Untermesser (22) der Schere (20) starr und das Obermesser (24) auf- und abbeweglich ist.

5. Vorrichtung nach einem oder mehreren der Ansprüche 1 bis 4,
**dadurch gekennzeichnet**,
daß der Besäumschere (7,8) eine Bandklemmeinheit (5) vorgeschaltet ist.

6. Vorrichtung nach einem oder mehreren der Ansprüche 1 bis 5,
**dadurch gekennzeichnet**,
daß zwei baugleiche Kompakt-Baueinheiten (6) eine relativ zum Durchlaufbereich des Walzbandes (3) verschwenkbare Wechselbesäumschere bilden.

## Claims

1. Device for trimming the longitudinal edges of a moving rolled strip, with rotating trimming shears and rotating waste or edge strip cross-cutting shears, between which an edge strip guide is arranged, especially such in which trimming shears and waste or edge strip cross-cutting shears are combined into a compact subassembly in the running direction of the rolled strip, characterised in that a transverse cutting equipment (20) adapted to the width of the edge strip is arranged upstream of the trimming shears (7, 8).

2. Device according to claim 1, characterised in that the transverse cutting equipment (20) is fastened to the trimming shears housing (18).

3. Device according to claim 1 or 2, characterised in that the transverse cutting equipment is constructed as shears (20).

4. Device according to claim 3, characterised in that the lower knife (22) of the shears (20) is fixed and the upper knife (24) is movable forward and back.

5. Device according to one or more of claims 1 to 4, characterised in that a strip clamping unit (5) is connected upstream of the trimming shears (7, 8).

6. Device according to one or more of claims 1 to 5, characterised in that two constructionally identical compact subassemblies (6) form an exchangeable trimming shears pivotable relative to the region of running through of the rolled strip (3).

## Revendications

1. Dispositif pour rogner les rives longitudinales d'un feuillard de laminage en mouvement, comportant une cisaille à rogner en rotation et une cisaille à couper les riblons ou bords tombants en rotation, entre lesquelles est agencé un guidage de bords tombants, en particulier dispositif dans lequel une cisaille à rogner et une cisaille à couper les riblons ou les bords tombants sont réunies en une unité structurelle compacte en direction de mouvement, caractérisé en ce qu'un dispositif de coupe transversale (20) adapté à la largeur de bord tombant est agencé en amont de la cisaille à rogner (7, 8).

2. Dispositif selon la revendication 1, caractérisé en ce que le dispositif de coupe transversale (20) est fixé sur le boîtier de cisaille à rogner (18).

3. Dispositif selon l'une ou l'autre des revendications 1 et 2, caractérisé en ce que le dispositif de coupe transversale est réalisé sous forme d'une cisaille (20).

4. Dispositif selon la revendication 3, caractérisé en ce que le couteau inférieur (22) de la cisaille (20) est rigide et le couteau supérieur (24) est mobile vers le haut et vers le bas.

5. Dispositif selon l'une ou plusieurs des revendications 1 à 4, caractérisé en ce qu'une unité de coincement de feuillard (5) est agencée en amont de la cisaille à rogner (7, 8).

6. Dispositif selon l'une ou plusieurs des revendications 1 à 5, caractérisé en ce que deux unités structurelles compactes identiques (6) forment une cisaille à rogner alternante en pivotement par rapport à la zone de passage du feuillard (3).
